# EUROPÄISCHE PATENTANMELDUNG

(11) **EP 1 245 463 A1**
(43) Veröffentlichungstag der Anmeldung: **02.10.2002**
(21) Anmeldenummer: 02001528.5
(22) Anmeldetag: 23.01.2002
(51) Int. Cl.: B60R 22/10, B60N 2/28

(54) **Verbindungselement für Sicherheitsgurte**

(30) Priorität: 31.03.2001 DE 20105685 U
(71) Anmelder: Leimer, Manfred, 89584 Ehingen-Nasgenstadt (DE)
(72) Erfinder: Leimer, Manfred, 89584 Ehingen-Nasgenstadt (DE)
(74) Vertreter: Dziewior, Joachim, Dipl.-Phys. Dr.

(57) **Zusammenfassung**

Das Verbindungselement ist für Sicherheitsgurte, insbesondere für einen aus zwei Einzelgurten (3) bestehenden Hosenträgergurt bei Kindersicherheitssitzen (2) zum Einsatz an Kraftfahrzeugen, Fahrrädern und dergleichen, vorgesehen. Das Verbindungselement weist dazu ein flaches, zur Anlage im Bauch- bzw. Brustbereich vorgesehenes Halteteil auf, das mit zwei manschettenartigen Aufnahmen für die beiden Einzelgurte (3) versehen ist, wobei wenigstens eine der beiden Aufnahmen zum Einlegen des Gurtes (3) sich öffnen läßt.

## Beschreibung

Die Erfindung betrifft ein Verbindungselement für Sicherheitsgurte, insbesondere für einen aus zwei Einzelgurten bestehenden Hosenträgergurt bei Kindersicherheitssitzen zum Einsatz an Kraftfahrzeugen, Fahrrädern und dgl.

Bei den üblichen, in zahlreichen Ausführungsformen und Gestaltungen bekannten Kindersicherheitssitzen laufen zwei Gurte in der Art eines Hosenträgers über die Schultern des Kindes nach hinten zur Sitzlehne des Kindersitzes. Insbesondere etwas ältere Kinder fühlen sich dadurch bisweilen eingeengt und neigen dazu, mit Ihren Schultern unter den beiden Gurten herauszuschlüpfen, wodurch die angestrebte Haltewirkung verschlechtert wird, da dann lediglich der das Becken umschließende Gurt wirksam ist.

Der Erfindung liegt die Aufgabe zugrunde, ein Verbindungselement zu schaffen, das es dem im Kindersitz angeschnallten Kind weitestgehend unmöglich macht, die Schultern aus den beiden Gurten freizubekommen.

Ein diese Aufgabe lösendes Verbindungselement ist gekennzeichnet durch ein flaches, zur Anlage im Bauchbzw. Brustbereich vorgesehenes Halteteil, das zwei manschettenartige Aufnahmen für die beiden Einzelgurte aufweist, wobei wenigstens eine der beiden Aufnahmen zum Einlegen des Gurtes sich öffnen läßt.

Der durch die Erfindung erreichte Vorteil besteht im wesentlichen darin, daß die beiden Gurte bis nahe zum Schulterbereich des Kindes auf festem, durch das Verbindungselement vorgegebenen Abstand gehalten werden, wodurch es dem Kind nicht mehr möglich ist, die beiden Gurte - in der Regel nacheinander - über die Schultern abzustreifen. Dennoch kann das Kind ohne weiteres in den Sitz gesetzt und angeschnallt werden, bzw. aus dem Sitz wieder herausgenommen werden, da sich zumindest eine der beiden Aufnahmen lösen läßt. Dabei kann das Verbindungselement auch so angebracht werden, daß die Aufnahme sich lediglich auf der dem Kind zugewandten Seite öffnen läßt, an die das Kind mit seinen Händen in der Regel nicht oder nur schwer herankommt.

In bevorzugter Ausführungsform der Erfindung sind die beiden Aufnahmen von zwei randseitig am Halteteil angeschlossenen Laschen gebildet, deren anderer Rand etwa mittig am Halteteil befestigt bzw. lösbar angebracht ist.

Weiter empfiehlt es sich, daß die beiden Aufnahmen bezüglich Ihrer Längsrichtung V-förmig zueinander ausgerichtet sind, da die beiden Gurte üblicherweise etwa mittig am Beckengurt zusammengeführt oder jedenfalls zwischen den Beinen des Kindes weiter nach unten verlaufen.

Um einerseits Verletzungen zu vermeiden und andererseits eine ausreichende Stabilität zu gewährleisten, ist im Rahmen der Erfindung vorgesehen, daß das Halteteil sowie die Laschen von einem relativ steif eingestellten Stoffgewebe gebildet sind.

Schließlich ist es im Hinblick auf eine leichte Lösbarkeit der Laschen einerseits und eine ausreichende Schließwirkung andererseits zweckmäßig, daß zum Schließen der Aufnahme(n) ein Klettverschluß vorgesehen ist.

Im folgenden wird die Erfindung an einem in der Zeichnung dargestellten Ausführungsbeispiel näher erläutert; es zeigen:
- Fig. 1: einen Kindersitz mit angebrachtem Verbindungselement in schematischer Darstellung
- Fig. 2: eine Detaildarstellung des Verbindungselementes nach Fig. 1
- Fig. 3: das Verbindungselement selbst nach Fig. 2
- Fig. 4: den Gegenstand nach Fig. 3, jedoch in geöffnetem Zustand,
- Fig. 5: eine weitere Ausführungsform, bei der beide Aufnahmen des Verbindungselementes zu öffnen sind.

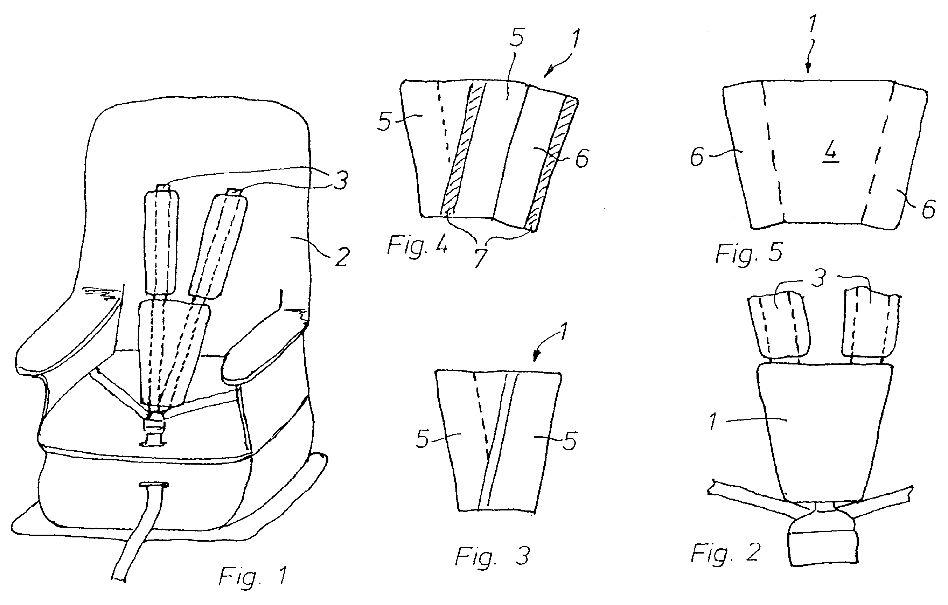

Das in der Zeichnung dargestellte Verbindungselement 1 ist, wie sich aus Fig 1. ergibt, für Sicherheitsgurte vorgesehen, insbesondere für einen aus zwei Einzelgurten 3 bestehenden Hosenträgergurt bei Kindersicherheitssitzen 2. Solche Kindersicherheitssitze 2 werden insbesondere bei Kraftfahrzeugen eingesetzt, sind jedoch auch bei Fahrrädern in Gebrauch.

Im einzelnen besteht das Verbindungselement 1 aus einem flachen Halteteil 4, das im Bauch- bzw. Brustbereich des zu sicherndes Kindes zur Anlage kommt. Es weist zwei maschettenartige Aufnahmen 5 für die beiden Einzelgurte 3 auf, wobei die Ausführungsform nach den Figuren 3 und 4 so gestaltet ist, daß nur eine der beiden Aufnahmen 5 sich zum Einlegen des Gurtes 3 öffnen läßt. In diesem Fall muß der andere Gurt 3 in die nicht zu öffnende Aufnahme 5 eingefädelt werden, verbleibt also dauerhaft an diesem Gurt 3. Bei der Ausführungsform nach Figur 5 dagegen lassen sich beide Aufnahmen 5 öffnen, so daß hier auch die Möglichkeit besteht, das Verbindungselement 1 - beispielsweise zum Säubern - leicht zu entfernen.

Die beiden Aufnahmen 5 sind von jeweils randseitig am Halteteil 4 angeschlossenen Laschen 6 gebildet, wobei der andere (freie) Rand etwa mittig am Halteteil 4 befestigt bzw. lösbar angebracht ist.

Die beiden Aufnahmen 5 verlaufen bezüglich ihrer Längsrichtung V-förmig zueinander, folgen also dem üblichen Verlauf der beiden Gurte 3.

Das Halteteil 4 sowie die Laschen 6 sind einstückig aus einem relativ steif eingestellten Stoffgewebe gebildet, wodurch einerseits ein ausreichender Halt gewährleistet ist, andererseits jedoch keine Gefahr von Verletzungen besteht, wie dies aus einem starren, etwa aus Kunststoff gefertigten Gegenstand der Fall sein könnte.

Die zu öffnenden Aufnahmen 5 sind in nicht näher dargestellter Weise mit einem Klettverschluß 7 versehen, der einerseits einen ausreichenden Halt im geschlossenen Zustand bietet, andererseits sich aber problemlos öffnen läßt.

## Patentansprüche

1. Verbindungselement für Sicherheitsgurte, insbesondere für einen aus zwei Einzelgurten (3) bestehenden Hosenträgergurt bei Kindersicherheitssitzen (2) zum Einsatz an Kraftfahrzeugen, Fahrrädern und dergleichen, **gekennzeichnet durch** ein flaches, zur Anlage im Bauch- bzw. Brustbereich vorgesehenes Halteteil (4), das zwei manschettenartige Aufnahmen (5) für die beiden Einzelgurte (3) aufweist, wobei wenigstens eine der beiden Aufnahmen (5) zum Einlegen des Gurtes (3) sich öffnen läßt.

2. Verbindungselement nach Anspruch 1, **dadurch gekennzeichnet, daß** die beiden Aufnahmen (5) von zwei randseitig am Halteteil (4) angeschlossenen Laschen (6) gebildet sind, deren anderer Rand etwa mittig am Halteteil (4) befestigt bzw. lösbar angebracht ist.

3. Verbindungselement nach Anspruch 1 oder 2, **dadurch gekennzeichnet, daß** die beiden Aufnahmen (5) bezüglich ihrer Längsrichtung V-förmig zueinander ausgerichtet sind.

4. Verbindungselement nach einem der Ansprüche 1 bis 3, **dadurch gekennzeichnet, daß** das Halteteil (4) sowie die Laschen (6) von einem relativ steif eingestellten Stoffgewebe gebildet sind.

5. Verbindungselement nach einem der Ansprüche 1 bis 4, **dadurch gekennzeichnet, daß** zum Schließen der Aufnahme(n) (5) ein Klettverschluß (7) vorgesehen ist.
